# FASCICULE DE BREVET EUROPEEN

(11) **EP 1 109 402 B1**
(45) Date de publication et mention de la délivrance du brevet: **10.09.2003**
(21) Numéro de dépôt: 00403425.2
(22) Date de dépôt: 06.12.2000
(51) Int. Cl.: H04N 5/44, H04N 7/10, H04N 5/63

(54) **Dispositif de mise en veille d'un répéteur radiofréquence**
Vorrichtung zum Scharfschalten eines Radiofrequenz-Transponders
Stand-by device for a radio frequency transponder

(30) Priorité: 16.12.1999 FR 9915882
(43) Date de publication de la demande: 20.06.2001
(73) Titulaire: SAGEM S.A., 75015 Paris (FR)
(72) Inventeur: Grosset, Gilles M., 95520 Osny (FR); Pelin, Patrice M., 75016 Paris (FR)
(74) Mandataire: Schmit, Christian Norbert Marie

(56) Documents cités:
- EP-A- 0 715 465
- EP-A- 0 859 514
- FR-A- 2 680 935
- PATENT ABSTRACTS OF JAPAN vol. 1999, no. 05, 31 mai 1999 (1999-05-31) & JP 11 055599 A (MATSUSHITA ELECTRIC IND CO LTD), 26 février 1999 (1999-02-26)

## Description

La présente invention à pour objet un dispositif de mise en veille d'un répéteur radiofréquence dans un dispositif de réception d'un signal radioélectrique de télévision. Elle s'applique généralement au domaine de la réception audiovisuelle et plus particulièrement aux décodeurs reliés d'une part à un réseau de vidéotransmission et d'autre part à un téléviseur et ou un magnétoscope et ou un récepteur satellite. Le syntoniseur permet notamment de sélectionner un canal vidéo parmi plusieurs et le répéteur radiofréquence de déporter le signal radioélectrique vers le téléviseur dans le cas d'une distribution par câble par exemple. Le but de l'invention est de réduire la consommation de ce répéteur radiofréquence lorsque ni le téléviseur, ni le magnétoscope, ni le récepteur satellite ne sont utilisés c'est à dire lorsqu'ils sont éteints ou en veille.

Actuellement, les répéteurs radiofréquences ne comportent pas de moyens de contrôle permettant de gérer une consommation de ces derniers en fonction d'une utilisation du téléviseur et ou du magnétoscope et ou du récepteur satellite. En conséquence, le répéteur radiofréquence est toujours actif.

Une telle réalisation présente des problèmes. En effet, le fait de laisser le répéteur radiofréquence activé en permanence ou plutôt alimenté en permanence est responsable d'une consommation d'énergie, même lorsque les appareils ne sont pas utilisés. En effet, le répéteur radiofréquence consomme une puissance de l'ordre de 1 watt. Or, une utilisation toujours plus importante de l'électronique dans les appareils domestiques conduit à avoir de plus en plus d'appareils qui, même en veille, consomment de l'énergie. En conséquence, si l'on somme toutes ces consommations d'énergie, que l'on pourrait qualifier de superflues à l'échelle d'un dispositif, on obtient rapidement une consommation dont un coût peut vite devenir prohibitif.

De plus, les pertes, qui sont principalement des pertes par dissipation thermique, sont responsables, dans une moindre mesure, d'un échauffement du milieu où se trouve ce répéteur radiofréquence. Cet échauffement conduit à un vieillissement plus rapide des circuits électroniques associés au répéteur radiofréquence.

Dans l'invention, le sens donné à l'expression répéteur radiofréquence englobe donc la fonction de réémission du signal radioélectrique de télévision, éventuellement avec du gain en niveau.

La présente invention a donc pour objet un dispositif permettant de mettre en veille le répéteur radiofréquence en fonction d'une activité du téléviseur et ou du magnétoscope et ou du récepteur satellite. En effet, lorsque le téléviseur et le magnétoscope ne sont pas utilisés, il n'est pas nécessaire de garder le répéteur radiofréquence actif. Par contre, une activation de l'un ou l'autre déclenche une mise dans un état hors veille du répéteur radiofréquence du décodeur. C'est ce que se propose de gérer le dispositif de l'invention.

L'invention concerne donc un dispositif primaire de réception d'un signal radioélectrique de télévision comportant un syntoniseur et un répéteur radiofréquence avec une entrée radio primaire recevant le signal radioélectrique et une sortie radio primaire permettant de déporter le signal radioélectrique vers un premier dispositif secondaire de réception du signal radioélectrique de télévision, un premier connecteur multibroches permettant d'émettre et ou de recevoir des signaux notamment en bande de base et ou des signaux de contrôle caractérisé en ce qu'il comporte un dispositif de commande d'une mise en veille du répéteur radiofréquence en fonction d'une réception ou non d'un signal d'activation, émis par le premier dispositif secondaire comportant un deuxième connecteur multibroches à destination du dispositif de commande via une liaison entre le deuxième connecteur multibroches et le premier connecteur multibroches, relatif à une utilisation ou non du premier dispositif secondaire respectivement.

La présente invention sera mieux comprise à la lecture de la description qui suit et à l'examen des figures qui l'accompagnent. Celles-ci ne sont montrées qu'à titre indicatif et nullement limitatif de l'invention. Les figures montrent:

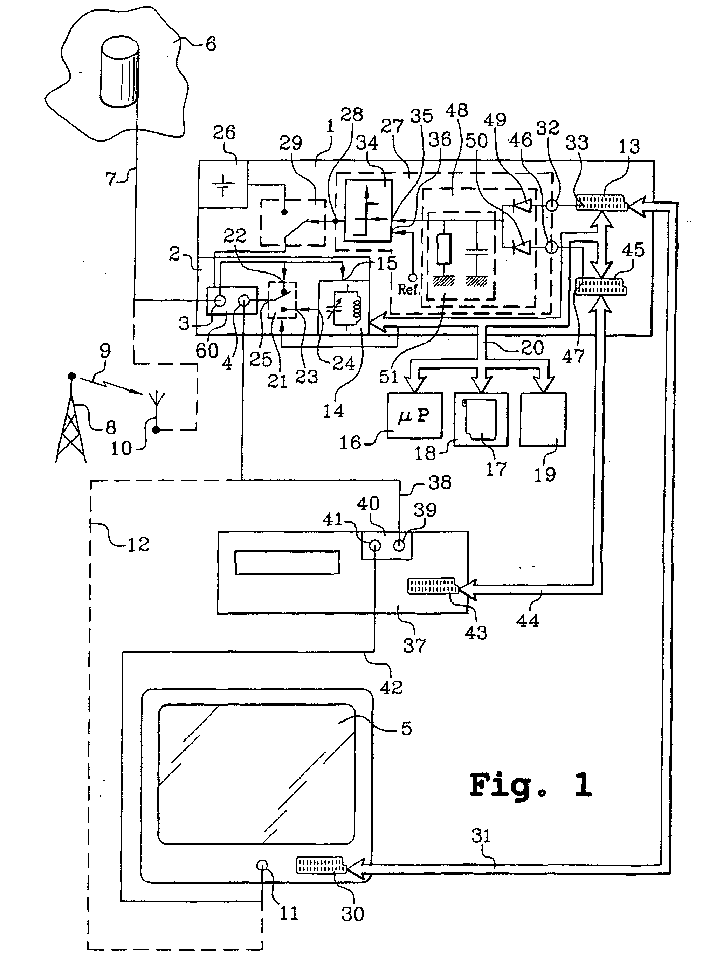

- Figure 1 : Une architecture simplifiée montrant le dispositif de l'invention.

La figure 1 montre un dispositif 1 primaire de réception, d'un signal de télévision, selon l'invention. Le dispositif 1 comporte notamment pour cela un syntoniseur 2 et un répéteur 60 radiofréquence avec une entrée radio 3 primaire destinée à recevoir un signal de télévision et une sortie radio 4 primaire permettant de déporter le signal de télévision vers un premier dispositif 5 secondaire de réception du signal de télévision. Ainsi, l'entrée 3 est reliée à un moyen de génération du signal de télévision. Dans un exemple préféré le moyen de génération est un réseau 6 de vidéo communication. L'entrée 3 est ainsi reliée au réseau 6 par l'intermédiaire, généralement, d'une liaison 7 filaire de type coaxiale voire à base de fibre optique. Cependant, le moyen de génération pourrait très bien être un émetteur 8 émettant un signal 9 de radiodiffusion capté par une antenne 10 qui serait donc reliée à l'entrée 3. En outre, le récepteur 60 est placé soit dans le syntoniseur 2 soit à l'extérieur de ce dernier.

Dans cet exemple préféré, le dispositif 1 est un décodeur de télévision c'est à dire un dispositif d'interface entre le réseau 6 et un téléviseur par exemple le dispositif 5. Le décodeur a pour fonction notamment d'adapter des signaux reçus du réseau 6 en des signaux compréhensibles pour le téléviseur 5. Il permet en outre de fournir une interface homme machine pour gérer les différents signaux de télévision pouvant être reçus du réseau 6. Ainsi, le téléviseur 5 comporte une première entrée radio 11 secondaire. Cette entrée 11 est reliée à la sortie 4 par l'intermédiaire d'une liaison 12 généralement filaire. En outre, le dispositif 1 comporte un premier connecteur 13 multibroches permettant d'émettre ou de recevoir des signaux notamment en bande de base et ou des signaux de contrôle. Parmi ces signaux on peut citer notamment les signaux audio ainsi que le signal vidéo composite. Le signal vidéo composite est une combinaison entre un signal vidéo représentatif d'une image à afficher sur un écran d'un téléviseur et les différents signaux de synchronisation associés telle que la synchronisation ligne et la synchronisation trame. On connaît notamment les signaux de synchronisation ligne et les signaux de synchronisation trame.

Ce syntoniseur 2 permet ainsi de se caler sur un canal pour sélectionner un signal de télévision désiré et reçu sur l'entrée 3. Le syntoniseur 2 comporte donc en conséquence un circuit 14 d'accord en fréquence permettant de sélectionner le canal désiré, l'entrée 3 du répéteur 60 étant reliée à une entrée 15 du circuit 14. Le circuit 14 assure une fonction d'accord en fréquence ainsi que toutes les fonctions liées à la réception d'un signal de télévision sur l'entrée 3. Un signal de télévision ainsi reçu et prêté par le circuit 14 est ensuite géré par un microprocesseur 16 commandé par un programme 17 dans une mémoire de programme 18 dans le dispositif 1. Le dispositif 1 comporte aussi une mémoire 19 de données et ou de sauvegarde ainsi qu'un bus 20 de données et d'adresses et de commandes.

Le répéteur 60 permet de déporter un signal de télévision reçu sur l'entrée 3 vers la sortie 4. Pour cela, le syntoniseur 2, ou éventuellement le répéteur 60, comporte un moyen 21 de commutation avec une entrée 22 reliée à l'entrée 3 et une entrée 23 reliée à une sortie 24 du circuit 14, une sortie 25 du moyen 21 étant reliée à la sortie 4. En outre, le répéteur 60 est alimenté par une source 26 d'alimentation.

Dans un fonctionnement normal, la sortie 4 est reliée soit directement à l'entrée 3 permettant ainsi de déporter le signal de télévision généré par le réseau 6 soit au circuit 14 permettant ainsi d'émettre un signal de télévision comportant des informations produites par le décodeur 1. On précise toute fois que le moyen 21 est décrit de manière symbolique afin de simplement expliciter la fonction de commutation.

Dans l'invention le décodeur 1 comporte un dispositif 27 de commande d'une mise en veille du répéteur 60. Ainsi, le dispositif 27 émet à une sortie 28 un signal de commande assurant ainsi cette mise en veille. Dans un exemple, le signal de commande agit sur un moyen 29 interrupteur permettant d'interrompre une alimentation du répéteur 60 par l'alimentation 26. Une mise en veille du répéteur 60 est réalisée en fonction d'une réception ou non d'un signal d'activation émis par le téléviseur 5. Dans ce cas, et selon une caractéristique essentielle de l'invention, le téléviseur 5 comporte un deuxième connecteur 30 multibroches tel que le connecteur 13. Ainsi, dans l'invention, le signal d'activation est émis du connecteur 30 vers le dispositif 27 via une liaison 31 entre le connecteur 30 et le connecteur 13. Dans un exemple préféré, le signal d'activation est soit un signal vidéo composite, soit un signal audio, ou encore un signal de bruit. Ce signal d'activation caractérise, par son activité c'est à dire lorsqu'il est produit, le fait que le dispositif secondaire est utilisé.

Le dispositif 27 comporte en outre une première entrée 32 reliée à une entrée 33, du connecteur 13, recevant le signal d'activation du téléviseur 5 par la liaison 31. Le signal ainsi reçu en entrée 32 est transmis à un dispositif 34 comparateur. Pour cela, le dispositif 34 comporte une entrée 35 et une sortie reliée à la sortie 28 du dispositif 27. Le dispositif 34 a pour fonction de comparer une valeur du signal d'activation avec une valeur de référence présente à une entrée 36 du dispositif 24. En fonction de cette comparaison le dispositif 34 produit en sortie 28 un signal de commande du moyen 29. Ainsi, par exemple, lorsque le téléviseur 5 est utilisé alors le signal vidéo composite est présent et est donc reçu en entrée 35. Ce signal vidéo composite est comparé, avec le dispositif 34, à la valeur de référence présente en entrée 36. Le dispositif 34 produit alors en sortie 28 un signal de commande d'une mise dans un état hors veille du syntoniseur 2 puisque le téléviseur 5 est utilisé ou plutôt vient d'être activé. Dans le cas contraire, le dispositif 34 aurait produit, en sortie 28, un signal de commande d'une mise en veille du répéteur 60.

Généralement, le téléviseur 5 est associé avec un magnétoscope 37. dans ce cas la liaison 12 n'est plus valide et est remplacée par une liaison 38 entre la sortie radio 4 et l'entrée radio 39 d'un syntoniseur 40 du magnétoscope 37. Ce syntoniseur 40 comporte en outre une sortie radio 41 permettant de déporter un signal reçu sur l'entrée 39 ou produit dans le magnétoscope 37 tel que le signal vidéo produit à l'aide d'une cassette vidéo. En outre, la sortie 41 est reliée à l'entrée 11 du téléviseur 5 par l'intermédiaire d'une liaison 42. Les liaisons 38 et 42 sont du même type que la liaison 12. Précédemment, il n'y avait qu'un seul dispositif secondaire de réception. Dorénavant, on a un deuxième dispositif secondaire de réception représenté par le magnétoscope 37. Ce magnétoscope 37 comporte en outre un connecteur 43 multibroches relié par une liaison 44 à un connecteur 45 multibroches du décodeur 1.

Ainsi, de même que pour le téléviseur 5, lors d'une utilisation du magnétoscope 37 celui-ci produit sur une broche du connecteur 43 un signal vidéo composite qui est reçu par le connecteur 45 par l'intermédiaire de la liaison 44. Le moyen 27 comporte alors une deuxième entrée 46 reliée à une broche 47 du connecteur 45 recevant le signal vidéo composite. Dans une variante préférée de l'invention le décodeur 1 comporte un moyen 48 de détection de la réception du signal d'activation.

Dans un exemple préféré, le moyen 48 est une cellule 48 réalisant une fonction logique OU. Cette cellule 48 comporte deux entrées et une sortie les deux entrées étant les entrées 32 et 46 et la sortie étant reliée à l'entrée 35. Ainsi, selon que l'on reçoit un signal vidéo composite du magnétoscope ou 37 ou de la télé 5 alors on active une mise dans un état hors veille du répéteur 60. Une fonction logique OU est réalisée de manière la plus simple possible en utilisant un jeu de diodes montées en cathodes communes. Dans un exemple, on utilise un montage à cathodes communes avec un jeu de deux diodes 49 et 50 dont les anodes sont reliées aux entrées 32 et 46 respectivement, les cathodes étant reliées à l'entrée 35. En outre, on place en parallèle sur les cathodes des diodes 49 et 50 une cellule 51 RC permettant d'obtenir ainsi un montage détecteur d'amplitude. Plus précisément, la cellule 51 est un filtre passe-bas qui permet d'obtenir en entrée 35 un signal pouvant être continu ou dont les variations sont lentes. L'utilisation d'une résistance variable et ou d'un condensateur variable permettant de régler une constante de temps associée à la cellule 51.

Le répéteur 40 peut très bien être mis dans un état de veille comme dans l'invention. En effet, le répéteur 40 a un fonctionnement identique au répéteur 2. On pourrait de même étendre l'invention au téléviseur 5 pour autant qu'il comporte un répéteur radiofréquence.

## Revendications

1. Dispositif (1) primaire de réception d'un signal de télévision comportant un syntoniseur (2) et un répéteur (60) radiofréquence avec une entrée radio (3) primaire recevant le signal de télévision et une sortie radiofréquence (4) primaire permettant de déporter le signal de télévision vers un premier dispositif (5) secondaire de réception du signal de télévision, un premier connecteur (13) multibroches permettant d'émettre et ou de recevoir des signaux notamment en bande de base et ou des signaux de contrôle **caractérisé en ce qu'**il comporte un dispositif (27) de commande d'une mise en veille du répéteur radiofréquence en fonction d'une réception ou non d'un signal d'activation; émis par le premier dispositif secondaire, comportant un deuxième connecteur (30) multibroches, à destination du dispositif de commande via une liaison entre le deuxième connecteur multibroches et le premier connecteur multibroches, relatif à une utilisation ou non du premier dispositif secondaire respectivement et **en ce que** le dispositif de commande comporte un moyen (48) de détection de la réception du signal d'activation.

2. Dispositif selon la revendication 1 **caractérisé en ce que** le signal d'activation est un signal vidéo composite.

3. Dispositif selon la revendication 1 ou 2 **caractérisé en ce que** le signal d'activation est un signal audio.

4. Dispositif selon l'une des revendications 1 à 3 **caractérisé en ce que** le moyen de détection est une cellule réalisant une fonction logique OU entre une première entrée comportant une première diode et une deuxième entrée comportant une deuxième diode dont soit une anode soit une cathode est reliée, à une sortie de la cellule, à soit une anode soit une cathode de la première diode respectivement.

## Patentansprüche

1. Primärvorrichtung (1) zum Empfangen eines Fernsehsignals mit einer Abstimmeinrichtung (2) und einem Hochfrequenz-Repeater (60) mit einem primären Hochfrequenzeingang (3), an dem das elektromagnetische Signal anliegt, und einem primären Hochfrequenzausgang (4) zum Weiterleiten des elektromagnetischen Signals an eine erste Sekundärvorrichtung (5) für den Empfang des Fernsehsignals,
einem ersten mehrpoligen Verbinder (13) für das Senden und/oder Empfangen von Signalen, insbesondere Niederfrequenz-und/oder Steuersignalen,
**dadurch gekennzeichnet, dass**
sie eine Steuervorrichtung (27) für das Umschalten des
Hochfrequenz-Repeaters in einen Ruhezustand in Abhängigkeit von einem Empfang eines Aktivierungssignals, das von der ersten Sekundärvorrichtung, die einen zweiten mehrpoligen Verbinder (30) umfasst, über eine Verbindung zwischen den zweiten mehrpoligen Verbinder und der Sekundärvorrichtung an die Steuervorrichtung, in Bezug auf eine Verwendung der ersten Sekundärvorrichtung ausgesendet wurde, umfasst, und **dass**
die Steuervorrichtung ein Erfassungsmittel (48) für den Empfang des Aktivierungssignals umfasst.

2. Vorrichtung nach Anspruch 1, **dadurch gekennzeichnet, dass** das Aktivierungssignal ein Videomischsignal ist.

3. Vorrichtung nach Anspruch 1 oder 2, **dadurch gekennzeichnet, dass** das Aktivierungssignal ein Audio-Signal ist.

4. Vorrichtung nach einem der Ansprüche 1 bis 3, **dadurch gekennzeichnet, dass**
das Erfassungsmittel eine Zelle ist, die eine logische ODER-Funktion zwischen einem ersten Eingang und einem zweiten Eingang ausführt, wobei der erste Eingang eine erste Diode und der zweite Eingang eine zweite Diode aufweist, von der entweder eine Anode oder eine Kathode mit einer Anode beziehungsweise einer Kathode der ersten Diode an einem Ausgang der Zelle verbunden ist.

## Claims

1. Primary device (1) for reception of a television signal including a tuner (2) and a radio-frequency repeater (60) with a primary radio input (3) receiving the television signal and a primary radio-frequency output (4) permitting porting out of the television signal to a first secondary device (5) for reception of the television signal, a first multi-terminal connector (13) permitting emission and or reception of signals in particular in the base band and or of control signals, **characterised by** the fact that it includes a device (27) for controlling the placing on standby of the radio-frequency repeater as a function of reception or non-reception of an activation signal, emitted by the first secondary device including a second multi-terminal connector (30), to the control device via a connection between the second multi-terminal connector and the first multi-terminal connector, relating to use or non-use of the first secondary device respectively and **by** the fact that the control device includes a means (48) for detecting the reception of the activation signal.

2. Device as described in claim 1, **characterised by** the fact that the activation signal is a composite video signal.

3. Device as described in claim 1 or 2, **characterised by** the fact that the activation signal is an audio signal.

4. Device as described in one of claims 1 to 3,
**characterised by** the fact that the detection means is a cell performing an OR logic function between a first input comprising a first diode and a second input comprising a second diode either an anode or a cathode of which is connected, at an output of the cell, to either an anode or a cathode of the first diode respectively.
